# EUROPEAN PATENT APPLICATION

(11) **EP 3 809 090 A1**
(43) Date of publication of application: **21.04.2021**
(21) Application number: 19461591.0
(22) Date of filing: 18.10.2019
(51) Int. Cl.: F28F 9/02, F28D 9/00, B23K 1/00, F16L 41/08

(54) **A CONNECTION ASSEMBLY**

(71) Applicant: Valeo Autosystemy SP. Z.O.O., 32-050 Skawina (PL)
(72) Inventor: GOLEBIOWSKA, Magdalena, 32 050 SKAWINA (PL); GUT, Damian, 32 050 SKAWINA (PL)
(74) Representative: Bialkowski, Adam

(57) **Abstract**

A brazing connection assembly is disclosed in accordance with an embodiment of the present invention. The brazing connection assembly includes a spigot and a plate. The brazing connection assembly further includes at least three sections protruding from the spigot. The three sections accommodates and maintains at least one brazing element between the spigot and the plate.

## Description

The present invention relates to a heat exchanger, particularly, the present invention relates to a connection assembly between a spigot and either one of a housing or a tank configured on the housing for a heat exchanger used in a vehicle.

A plurality of heat exchangers are used in vehicle such as for example, a radiator used in engine cooling system, a condenser, an evaporator used in vehicle air conditioning system and charge air cooler for cooling compressed air entering into the combustion chamber. The charge air cooler is generally cooled by water and is often referred to as a Water Charge Air cooler. In case of the water charged air cooler, the water flows through heat exchange passages configured within a housing and the housing receives air to be cooled that surrounds the heat exchange passages. The heat exchanger includes a first pair of inlet and outlet spigots configured on the housing or the tank and in fluid communication with the heat exchanger passages for ingress of the water into the heat exchanger passages and egress of the water from the heat exchanger passages respectively. The heat exchanger further includes a second pair of pipes configured on the housing or the tank for ingress and egress of air with respect to the housing respectively. The first inlet and outlet spigots are either directly mounted on the housing. Other-wise the first inlet and out let spigots are indirectly connected to the housing via respective inlet and outlet tanks disposed in between the respective inlet and outlet spigots and the housing. The inlet water tank distributes the water to the heat exchange passages, whereas the outlet water tank collects water after the water has extracted heat from the air surrounding the heat exchange passages. As, the heat exchange passages are constricted, the water supplied to the water charge air cooler is often pressurized by a pump. Accordingly, the spigots, such as for example, the first inlet spigot that supplies water to the heat exchange passages is subjected to dynamic cyclic loads. The dynamic cyclic loads acting on the spigots cause bending tensions that in turn may cause failure or dislodging of the spigots from the housing.

A secure, robust and leak-proof connection is required between the spigots and a plate forming a part of either one of the housing or the water tanks configured on the housing and connecting the spigots to the housing. Generally, a brazing ring is disposed between each of the spigots and the plate, thereafter, assembly of the spigots and the plate is subjected to high temperature in a brazing furnace, where the brazing ring fuses to form connection between the spigot and the plate. In order to position the brazing ring, maintain the brazing ring in position to prevent misalignment of the brazing ring and improper brazing connection between the spigot and the plate, either a groove or a collar is configured on the plate. However, in case the plate of thin-section, configuring of the collar or the groove on such plate is not feasible. Specifically, machining the groove on the already thin-section plate induces high stress concentration along the groove. The high stress concentrations combined with over-pressure of fluid received inside the housing renders the housing or the water tank prone to mechanical failures. In addition, erosion along the groove further reduces cross section of the plate along the groove and aggravates the stresses, thereby increasing the chances of mechanical failure. Still further, thin plate is not having sufficient thickness or material required for forming of the collar thereon by stamping.

Accordingly, there is a need for a connection assembly that configures a secure, robust, reliable and leak-proof connection between a spigot and a housing or a water tank of a heat exchanger such as for example, Water charge Air cooler. Further, there is a need for a connection assembly that obviates the drawbacks associated with conventional connection assembly that requires configuring either a groove or a collar on a plate configuring either one of a housing or a water tank. Another object of the present invention is to provide a connection assembly that configures secure connection between spigot and a housing or a water tank, even if the housing or the water tank is having a thin walled construction. Further, there is a need for a connection assembly that prevents fused brazed material from reaching smooth surfaces of the spigot. Furthermore, there is a need for a connection assembly that is simple and involves fewer process steps as compared to conventional connection assemblies.

An object of the present invention is to provide a connection assembly that obviates the drawbacks associated conventional connection assemblies that require configuring either a groove or a collar on the housing or the water tank for configuring a connection.

Another object of the present invention is to provide a connection assembly that positions and maintains a brazing ring in between a spigot and either one of a housing or a water tank for configuring secure connection between the spigot and either one of the housing and the water tank.

Yet another object of the present invention is to provide a connection assembly that configures a secure, robust, reliable and leak-proof connection between a spigot and a housing or a water tank of a heat exchanger.

Still another object of the present invention is to provide a connection assembly that configures connection between a spigot and even on a thin walled structure of a housing or a water tank.

Yet another object of the present invention is to provide a connection assembly that is simple and involves fewer process steps as compared to conventional connection assemblies.

In the present description, some elements or parameters may be indexed, such as a first element and a second element. In this case, unless stated otherwise, this indexation is only meant to differentiate and name elements which are similar but not identical. No idea of priority should be inferred from such indexation, as these terms may be switched without betraying the invention. Additionally, this indexation does not imply any order in mounting or use of the elements of the invention.

A brazing connection assembly is disclosed in accordance with an embodiment of the present invention. The brazing connection assembly includes a spigot and a plate. The connection assembly further includes at least three sections protruding from the spigot, wherein the three sections accommodates and maintains at least one brazing element between the spigot and the plate.

In accordance with an embodiment of the present invention, the spigot includes a flange provided thereon and radially extending outward therefrom, the three radially protruding sections are provided along periphery of the flange and protrude radially outward from the flange.

Generally, each of the at least three sections is complimentary to the brazing element.

In accordance with an embodiment, the sections are connected to each other to form a continuous annular ring around the spigot.

Alternatively, the three sections are separated by gaps to form a discontinuous profile along periphery of the spigot.

Preferably, the brazing element is a continuous closed ring.

Alternatively, the brazing element is a discontinuous profile arranged along periphery of the spigot.

Further, a heat exchanger is disclosed in accordance with an embodiment of the present invention. The heat exchanger includes a housing, a pair of inlet and outlet spigots, a pair of inlet and outlet pipes. The housing receives a plurality of elements forming a plurality of heat exchange passages through which a first fluid flows. The housing further receives a second fluid around the heat exchanger passages to facilitate heat exchange between the first fluid and the second fluid. The pair of inlet and outlet spigots are connected to either one of the housing and a pair of water tanks configured on the housing, the pair of inlet and outlet spigots are in fluid communication with the heat exchanger passages for ingress of the first fluid into the heat exchanger passages and egress of the first fluid from the heat exchanger passages respectively. The pair of inlet and outlet pipes are configured on a manifold connected to the housing for ingress and egress of the second fluid with respect to the housing respectively. The connection between at least one spigot of the pair of inlet and outlet spigots and a plate defining a portion of either one of the housing and the pair water tanks configured on the housing of the heat exchanger is formed by the brazing connection assembly as disclosed above.

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
**FIG. 1a** illustrates a schematic representation of a conventional connection assembly for configuring connection between a spigot and a plate that is a part of either one of a housing and a water tank;
**FIG. 1b** illustrates a schematic representation of another conventional connection assembly;
**FIG. 2** illustrates an enlarged view of a connection assembly in accordance with an embodiment of the present invention forming connection between a first pair of inlet and outlet spigots and a pair of water tanks;
**FIG. 3a** illustrates an exploded view of a heat exchanger, particularly, a Water charge Air cooler with the connection assembly of **FIG. 2** for forming connection between the first pair of inlet and outlet spigots and the pair of water tanks;
**FIG. 3b** illustrates the connection assembly of **FIG. 3a****;**
**FIG. 4** illustrates an isometric view of a spigot configured with a continuous annular ring disposed there around and protruding therefrom to form a part of a connection assembly in accordance with another embodiment of the present invention.

It must be noted that the figures disclose the invention in a detailed enough way to be implemented, said figures helping to better define the invention if needs be. The invention should however not be limited to the embodiment disclosed in the description.

The present invention envisages a brazing connection assembly that includes a spigot and a plate, wherein the plate is forming a part of either one of a housing or water tank configured on the housing of a heat exchanger, particularly, a Water Charge Air-Cooler (WCA). The brazing connection assembly uses a modified spigot, particularly, spigot with at least three sections protruding therefrom to accommodate a brazing element and maintaining the brazing element between the spigot and a plate as an end portion of the spigot is received in an aperture configured on the plate. Although, the brazing connection assembly of the present invention is explained in the forthcoming description for configuring connection between the spigot and either one of the housing or the water tank configured on the housing of the water charge air cooler for use in a vehicle. However, the brazing connection assembly is also applicable for any other applications, where it is required to configure a secure, robust, reliable and leak-proof connection between a spigot and a housing or a water tank configured on a heat exchanger that is not limited to vehicle applications. Particularly, the brazing connection assembly of the present invention finds use in systems and applications where the structure to which the spigot is connected is having a thin walled construction and the spigot is subjected to stresses, dislodging forces, dynamic and cyclic loads due to pressurized fluid supplied thereto by a pump.

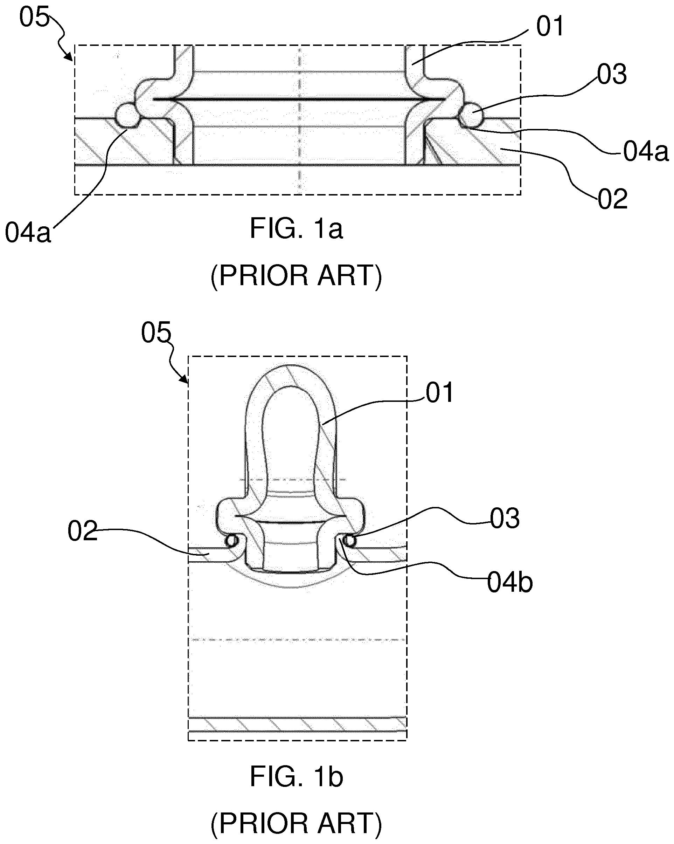

**FIG. 1a** and **FIG. 1b** illustrates a schematic representation of a conventional brazing connection assembly **05** for configuring a secure, robust and leak-proof connection between spigots **01** and a plate **02** that forms a part of housing or water tanks configured on the housing. The conventional brazing connection assembly **05** utilizes at least one brazing ring **03** positioned between the spigots **01** and the plate **02.** The at least one brazing ring **03** undergoes fusion and configures connection between the spigots **01** and the plate **02,** when subjected to high temperature in a brazing furnace. In order to position and maintain the at least one brazing ring **03** in the desired position to prevent misalignment of the at least one brazing ring **03** and improper connection between the spigot **01** and the plate **02,** either a groove **04a** or a collar **04b** is configured on the plate **02.** **FIG. 1a** illustrates the conventional brazing connection assembly **05,** wherein the groove **04a** configured on the plate **02,** positions and maintains the at least one brazing ring **03** between the spigot **01** and the plate **02.** **FIG. 1b** illustrates the conventional brazing connection assembly **05,** wherein the collar **04b** configured on the plate **02** positions and maintains the at least one brazing ring **03** between the spigot **01** and the plate **02.** However, in case the plate **02** is a thin-sectioned plate that is usually the case for reducing overall weight, configuring of the groove **04a** or the collar **04b** on the plate is not feasible. Specifically, machining the groove **04a** on the plate **02** that is already thin-section induces high stress concentration along the groove **04a.** The high stress concentrations combined with over-pressure of fluid received in the tank or housing renders the housing or the water tank prone to mechanical failures. Also, erosion along the groove **04a** further reduces cross section of the plate **02** along the groove and aggravates the stresses, thereby increasing the chances of mechanical failure of the housing or the water tank. Still further, material of the plate **02** of thin section is not sufficient for forming of the collar **04b** by stamping.

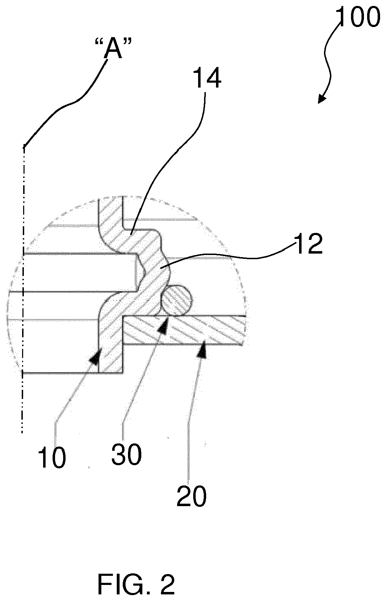

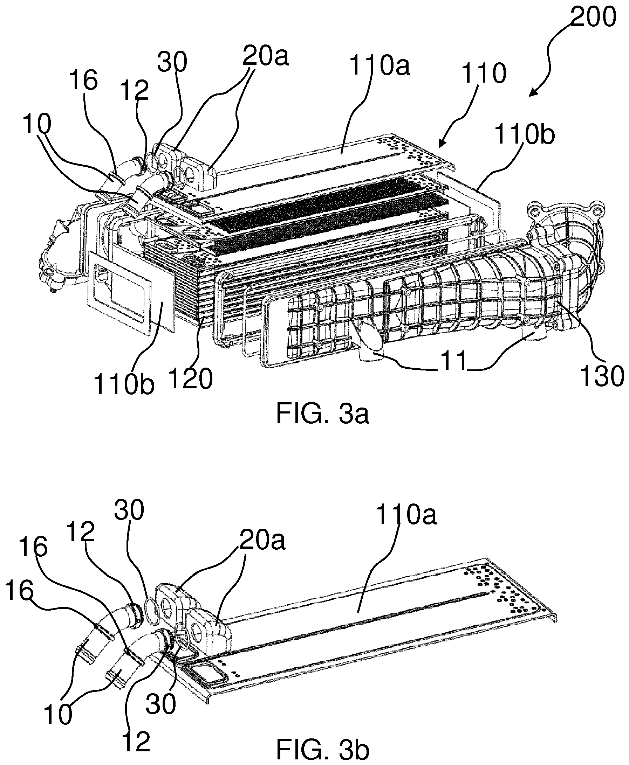

To overcome the drawbacks of the conventional connection assemblies, the present invention envisages a new connection assembly, wherein seating and positioning arrangement for positioning of at least one brazing element between a spigot and a thin-sectioned plate configuring a housing or a water tank formed on the housing of a heat exchanger is configured on the spigot instead of the thin sectioned plate. Such a configuration of modified spigot with seating and positioning arrangement for positioning of the at least one brazing element configured thereon eliminates the drawback associated with conventional connection assembly, specifically conventional connection assembly that requires configuring of groove or collar on the thin sectioned plate for positioning of the at least one brazing element. **FIG. 2** illustrate an enlarged view of a brazing connection assembly, simply referred to as a connection assembly **100** in accordance with the present invention. The connection assembly **100** includes a modified spigot **10** configured with at least three radially protruding sections **12.** The at least three radially protruding sections **12** are configured along a periphery of the spigot **10** and are co-planar with respect to each other. In accordance with an embodiment of the present invention, the at least three radially protruding sections **12** are disposed along a plane that is orthogonal to an axis "A" of the spigot **10.** In accordance with an embodiment of the present invention, the spigot **10** includes a flange **14** configured thereon and radially extending outward therefrom. The at least three radially protruding sections **12** are configured along periphery of the flange **14** and protrude radially outward from the flange **14.** The flange **14** is so configured on the spigot **10,** that one extreme end of the spigot **10** downstream of the at least three radially protruding sections **12** in direction of flow of fluid through the spigot **10** is received in an aperture configured on a plate **20.** The at least three radially protruding sections **12** are axially spaced from the plate **20** as the extreme end portion of the spigot **10** is received in an aperture configured on the plate **20** to receive at least one brazing element **30** between the at least three radially protruding sections **12** and the plate **20.** The plate **20** forms a part of either one of a housing **110** or a water tank **20a** configured on the housing **110** of a heat exchanger, particularly, a water charge air cooler **200** as illustrated in **FIG 3a****.** The connection assembly **100** configures fluid communication between the spigot **10** and heat exchange passages formed by heat exchange element, such as for example, heat exchange tubes or plates disposed inside the housing **110.**

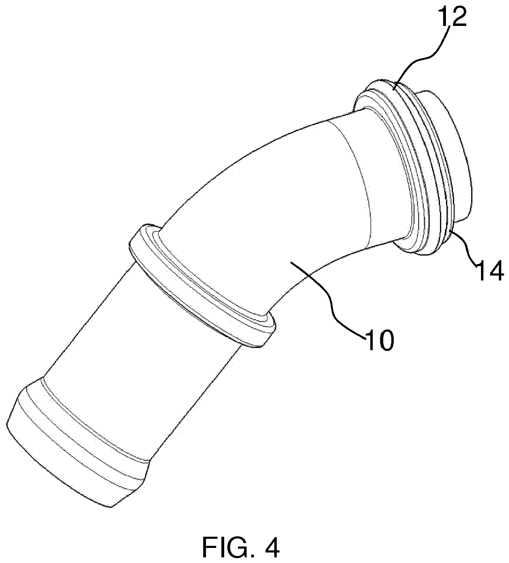

The space between the at least three radially protruding sections **12** and the plate **20** as the as the extreme end portion of the spigot **10** is received in an aperture configured on the plate **20** accommodates and maintains the at least one brazing element **30** between the at least three radially protruding sections **12** and the plate **20.** In accordance with an embodiment of the present invention, each of the at least three protruding sections **12** is complimentary to the at least one brazing element **30.** In accordance with an embodiment of the present invention, the at least one brazing element **30** is in form of a continuous closed ring. In accordance with another embodiment of the present invention, the at least one brazing element **30** is a discontinuous profile arranged along a periphery of the spigot **10.** However, the present invention is not limited to any particular configuration of the at least one brazing element **30,** as far as the at least one brazing element **30** is capable of being accommodated and configuring a brazing connection between the at least three protruding sections **12** configured along the periphery of the spigot **10** and the plate **20.** In accordance with an embodiment, the at least three sections **12** are connected to each other to form a continuous annular ring **12** around the spigot **10** as illustrated in **FIG. 4****.** More specifically, the protruding section is in form of fully circular shape disposed around the spigot **10** to hold the at least one brazing element **30** between the spigot **10** and the plate **20.** Alternatively, the at least three sections **12** are separated by gaps to form a discontinuous profile along periphery of the spigot **10.** The at least three sections or continuous annular ring **12** formed on the spigot **10** holds the at least one brazing element **30** between the spigot **10** and the plate **20.** However, the present invention is not limited to any particular configuration and placement of the at least three sections **12** radially protruding from the spigot **10,** as far as the at least three sections **12** are capable of accommodating the at least one brazing element **30** and maintaining the at least one brazing element **30** between itself and the plate **20.** With such configuration, the at least one brazing element **30** can be positioned and retained between the at least three sections **12** and the plate **20,** as the extreme end portion of the spigot **10** is received in the aperture configured on the plate **20,** thereby resulting in secure brazing connection between the spigot **10** and the plate **20.** As the connection assembly **100** of the present invention involves modifying the spigot **10** instead of forming stress inducing groove or collar on the plate **20** forming a part of either the housing **110** or the pair of water tanks **20a** formed on the housing **110,** the housing **110** or the pair of water tanks **20a** can be configured of thin-sectioned plates, thereby resulting in cost saving and material saving.

Further, a heat exchanger, for example, a water charge air cooler **200** is disclosed in accordance with an embodiment of the present invention. The water charge air cooler, includes the housing **110,** a pair of inlet and outlet spigots **10,** a pair of inlet and outlet pipes **11.** **FIG. 3a** illustrates an exploded view of the Water charge Air cooler **200** with the connection assembly **100** for forming connection between the first pair of inlet and outlet spigots **10** and the pair of water tanks **20a.** **FIG. 3b** illustrates the connection assembly **100** configured on the side plate **110a** forming the housing **110.** The housing **110** forms an enclosure by joining a plurality of side plates **110a** and a pair of end plates **110b.** The housing **110** receives a plurality of elements forming a plurality of heat exchange passages **120** through which a first fluid, particularly, water flows. The housing **110** further receives a second fluid, particularly, air to be cooled around the heat exchange passages **120** to facilitate heat exchange between the first fluid, i.e. water and the second fluid, i.e. air to be cooled. The pair of inlet and outlet spigots **10** are either directly connected to the housing **110** or are connected to the respective inlet and outlet water tanks **20a** configured on the housing **110.** The pair of the inlet and outlet spigots **10** are in fluid communication with the heat exchange passages **120** for ingress of the first fluid, i.e. water into the heat exchange passages **120** and egress of the first fluid from the heat exchange passages **120** respectively. The pair of inlet and outlet pipes **11** is integrally formed on a manifold **130** connected to the housing **110** for ingress and egress of the second fluid, i.e. air with respect to interior of the housing **110** respectively so that the air surrounds the heat exchanger passages **120** through which the water flows. The manifold **130** with the pair of inlet and outlet pipes **11** integrally formed thereon is of plastic and is formed by moulding. The connection between at least one spigot of the pair of inlet and outlet spigots **10** and a plate **20** defining or forming a part of either the housing **110** or the water tanks **20a** configured on the housing **110** of the water charge Air cooler **200** is formed by the connection assembly **100** as disclosed above. The heat exchanger further includes an additional collar **16** configured on the spigot **10.** The additional collar **16** is in form of a closed circular profile disposed along periphery of the spigot **10.** The additional collar **16** is disposed between the section **12** and the extreme end of the spigot **10.** The additional collar **16** prevents clad from melted/fused brazing material from reaching smooth surface, particularly, the sealing surface of the spigot **10** at the extreme end of the spigot **10** that is connected to a hose. Such configuration ensures that smoothness of the sealing surface is maintained to ensure tight connection between the spigot **10** and the hose supplying heat exchange fluid to the spigot **10.**

Several modifications and improvement might be applied by the person skilled in the art to a brazing connection assembly as defined above, and such modifications and improvements will still be considered within the scope and ambit of the present invention, as long as the brazing connection assembly includes a spigot and a plate and the brazing connection assembly further includes at least three sections protruding from the spigot. The three sections accommodates and maintains at least one brazing element between the spigot and the plate.

Obviously, numerous modifications and variations of the present invention are possible in light of the above teachings. It is therefore to be understood that the invention may be practiced otherwise than as specifically described herein.

In any case, the invention cannot and should not be limited to the embodiments specifically described in this document, as other embodiments might exist. The invention shall spread to any equivalent means and any technically operating combination of means.

## Claims

1. A brazing connection assembly (100) comprising a spigot (10) and a plate (20), the assembly (100) comprising at least three sections (12) protruding from the spigot (10), wherein the three sections (12) are adapted to accommodate and maintain at least one brazing element (30) between the spigot (10) and the plate (20).

2. The brazing connection assembly (100) as claimed in the previous claim, wherein the spigot (10) comprises a flange (14) provided thereon and radially extending outward therefrom, wherein the radially protruding sections (12) are provided along periphery of the flange (14) and protrude radially outward from the flange (14).

3. The brazing connection assembly (100) as claimed in the previous claim, wherein each of the sections is complimentary to the at least one brazing element (30).

4. The brazing connection assembly (100) as claimed in any of the preceding claims, wherein the sections (12) are connected to each other to form a continuous annular ring around the spigot (10).

5. The brazing connection assembly (100) as claimed in any of the preceding claims, wherein the sections (12) are separated by gaps to form a discontinuous profile along periphery of the spigot (10)

6. The brazing connection assembly (100) as claimed in any of the preceding claims, wherein the brazing element (30) is a continuous closed ring.

7. The brazing connection assembly (100) as claimed in any of the preceding claims, wherein the brazing element (30) is a discontinuous profile along arranged periphery of the spigot (10).

8. A heat exchanger (200) comprising:
• a housing (110) adapted to receive a plurality of elements forming a plurality of heat exchange passages (120) through which a first fluid flows, the housing (110) further being adapted to receive a second fluid around the heat exchange passages (120) to facilitate heat exchange between the first fluid and the second fluid;
• a pair of inlet and outlet spigots (10) connected to either one of the housing (110) and a pair of water tanks (20a) configured on the housing (110), the pair of inlet and outlet spigots (10) are in fluid communication with the heat exchange passages (120) for ingress of the first fluid into the heat exchange passages (120) and egress of the first fluid from the heat exchange passages (120) respectively; and
• a pair of inlet and outlet pipes (11) configured on a manifold (130) connected to the housing (110) for ingress and egress of the second fluid with respect to interior of the housing (110) respectively;
**characterized in that** the connection between at least one spigot of the pair of inlet and outlet spigots (10) and a plate (20) defining a portion of either one of the housing (110) and the pair of water tanks (20a) configured on the housing (110) of the heat exchanger (200) is formed by brazing connection assembly of claim 1.

9. The heat exchanger (200) as claimed in the previous claim, wherein the heat exchanger is a water charge-air cooler.

10. The heat exchanger (200) as claimed in any of the preceding claims, wherein the heat exchanger (200) further comprises an additional closed profile collar (16) formed along periphery of the spigot (10) and disposed between the sections (12) and an extreme end of the spigot (10) to prevent fused brazing material from reaching smooth sealing surface of the spigot (10) at the extreme end of the spigot.
